(19) Europäisches Patentamt
European Patent Office
Office européen des brevets

(11) EP 2 767 554 B1

(12) **EUROPEAN PATENT SPECIFICATION**

(45) Date of publication and mention of the grant of the patent:
**04.10.2017 Bulletin 2017/40**

(21) Application number: **12849611.4**

(22) Date of filing: **11.10.2012**

(51) Int Cl.:
***C08G 63/78*** *(2006.01)* ***C08G 63/18*** *(2006.01)*

(86) International application number:
**PCT/CN2012/082770**

(87) International publication number:
**WO 2013/071802 (23.05.2013 Gazette 2013/21)**

(54) **FAST DEGRADABLE POLYESTER POLYMER AND PREPARATION METHOD AND USE THEREOF**

SCHNELL ABBAUBARES POLYESTERPOLYMER SOWIE VERFAHREN ZU SEINER HERSTELLUNG UND VERWENDUNG

POLYMÈRE DE POLYESTER DÉGRADABLE RAPIDEMENT ET SON PROCÉDÉ DE PRÉPARATION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2011 US 201161627430 P**
**08.10.2012 CN 201210380279**

(43) Date of publication of application:
**20.08.2014 Bulletin 2014/34**

(73) Proprietors:
- **Huang, Bin**
**Fremont City, California 94539 (US)**
- **Molecon (Suzhon) Novel Materials Co. Ltd.**
**Suzhou Industrial Park**
**Suzhou City,**
**Jiangsu 215121 (CN)**

(72) Inventors:
- **HUANG, Bin**
**Fremont City**
**CCA 94539 (US)**
- **VAUGHN, John**
**Pacifica, CA 94044 (US)**
- **LEE, Hyo J.**
**Pleasanton, CA 94588 (US)**

(74) Representative: **Graf von Stosch, Andreas et al**
**Graf von Stosch**
**Patentanwaltsgesellschaft mbH**
**Prinzregentenstraße 22**
**80538 München (DE)**

(56) References cited:
**WO-A1-2011/054896** **WO-A2-2010/030599**
**CN-A- 1 976 970** **CN-A- 101 684 173**
**CN-A- 101 684 173** **CN-A- 101 684 175**
**CN-A- 101 717 494** **JP-A- H08 217 865**
**JP-A- 2001 098 061** **US-A- 5 484 861**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 767 554 B1

Printed by Jouve, 75001 PARIS (FR)

## Description

### Cross Reference to Related Applications

This application is a Continuation-In-Part (CIP) of United States Provisional Patent Application Serial Nos. 61/095,541, filed on September 9, 2008; United States Patent Application 13/061, 802; International Patent Application No PCT/US09/56222.

### Field of Invention

The present invention relates to the preparation methods and applications of one kind of rapidly degradable polyester polymers. More particularly, the invention relates to the preparation and applications of condensation-type copolyesters by embedding small biodegradable segments in the polymer main chains. It belongs to the field of functional polymer materials.

### Background of Invention

Polyesters are the general name of polymers prepared by condensation polymerization of polyol (poly alcohol) with poly acids, the typical polyester is an aromatic polyester that is represented by polyethylene terephthalate (PET), which is widely applied in various industries of fibers, packaging and others for its excellent chemical stability, proper mechanical properties and transparency and health performance. At the present time, polyester production and sales growth momentum remains strong, especially in the field of packaging of carbonate drinks. With the breakthrough of research on polyester’s resistance properties, applications in the field of beer, food and cosmetic packaging will enlarge the market of polyesters. However, the polyester (PET) waste is difficult to degrade naturally in nature. In an environment of humidity of 45%~100%, and temperatures of 20°C the PET bottles can exists for 30~40 years, and only 50% loss of its mechanical properties ; at the same conditions, the polyester film can exists as long as 90~100 years. Therefore, the huge amount of polyester waste will bring tremendous pressure to the environment.

Recycling polyester waste is a prioritized method used in the world because it can solve environmental problems and meanwhile fully utilize resources. Various recycling technologies have been developed for PET family recycling. The simple way to recycle polyester waste can be: purifying after the cleaning treatment, re-melting it and re-processing it into a relatively low-grade products, such as toys, detergent bottles. To re-produce high-grade polyester, the polyesters need to be degraded, re-polymerized or used as chemical raw materials because polyester is a poly-condensed macromolecular material. In addition, there are petroleumization technologies, fuel recycling technologies, burning together with other waste, and other energy recycling technologies.

But recycling and re-utilization of polyester waste cannot become the final solution for environment pollutions. The first reason is the limitation of re-utilizing polyester waste, because it contains a lot of additives or other impurities that cannot be removed, or it is already regenerated polyester , and thus it is very difficult to reutilize it. Secondly, many polyester products are not suitable to be collected and recycled, such as agriculture films, garbage bags, etc.. Finally, it may not be worth to recycle those products if they cost too much or are not valuable. Therefore, it is necessary to modify the degradability of such polyesters, make them degradable into small molecules in certain times at natural conditions and finally return them back to the recirculation of nature.

It will be very beneficial for promoting polyesters long-term development, if the lifetime of polyester in nature can be effectively controlled and therefore contamination of its environment avoided, which makes PET-based polyester materials environment friendly.

The chemical factors which may affect the degradability of materials include hydrophilicity, morphology, molecular mass, polymer composition, and etc. The stronger the hydrophilicity of a polymer is, the easier hydrolysis will be, and it will also be favored to be biodegraded by micro-organisms. Hydrolysis enzymes like to attack ester bonds, amide bonds and amino carboxylic acid bonds; and the amorphous domains of polymers are easier damaged by water and micro-organisms than the crystal domains of polymers. Polymers with soft chains and low glass transition temperature are more easily degraded; the degradability of polymers also increase with the decreasing of molecular weight of polymers. The composition of polymers, such as blend polymers and copolymers, also can affect its degradation performance.

PET polyester contains ester bonds which are easily damaged by micro-organism enzymes and water. At molten state, trace amount of moisture can cause rapid breaking of polyester bonds. In the processing and production of polyesters, the moisture content of the resin must be strictly controlled. However, under normal conditions, PET polyester has good chemical stability; it is difficult to be degraded under natural conditions. This could be attributed to the regularity of structure of PET polymer main chain, and the aromatic rings contained in the main chain of PET. Existing aromatic rings increase the polarity the polymer chains with regularity, which lowers its flexibility and improves its crystallization performance. High crystallinity of polymers can play a role in resisting hydrolysis, because the water molecules

are blocked from entering the crystallization phase. PET is a half crystallized polymer, its initial stage of degradation occurs in those amorphous domains with relative loose structure and the edges of half crystallized domains. The hydrolysis and breaking of molecular chain segments between micro-particles of crystal will result in molecular chains in an amorphous state becoming further crystalline, makes crystallinity obviously increased, thereby hinders the occurring of further hydrolysis; on the other hand, increasing of rigidity of molecular chain will lower the moving activities of macromolecules. It could be characterized by a higher glass transition temperature, and therefore reduces the sensitivity of polymers to hydrolysis. Therefore, different from the molten status, solid state degradation is a complex process which depends on activities of polymer chains and its penetrating capability.

Based on the above analysis for control factors of degradability of PET polyester, it is necessary to lower the crystallization capability and glass transition temperature for improving degradability of PET polyester. The decrease of glass transition temperature of polyester can also increase the mobility of polymer chain segments and reduce the energy needed for changing status, thereby increasing susceptibility to hydrolysis of polyester. Lower crystallinity can make water molecules or microbes effectively penetrate into inner material and attack its weak ester bonds.

Ways to reduce PET crystallinity can be either through controlling the late stage of polymer materials processing, or through molecular design concepts, in some extent to reverse the polarity of PET polymer to a more rigid structured architecture. By introducing a third structure unit that is flexible or contains specific functional groups, the crystallization properties of PET can be changed radically. Methods to introduce third structure units are mainly co-polymerization with the addition of a modifier and a reactive blend with aliphatic polyesters.

WO 2010/030599 A2 discloses modified condensation-type copolyesters or copolyamides. These polymers are structurally different from the polyester polymers disclosed herein and comprise degradable and non-degradable blocks of short length polyester (oligomers) or polyamide (oligomers) and modifiers, which contain hydroxyl acid blocks.

Although the approaches are theoretically clear for providing PET category aromatic polyesters, the applications are still very limited in practical production. As PET category polyesters are widely applied materials in the synthetic resin, studying its degradability may eliminate the impact of their waste on the environment, and it will be very meaningful for its long-term development.

**Content of Invention**

In order to resolve above problems for existing technologies, the objective of the present invention is to provide one kind of rapid degradable polyester polymers and their preparation methods and applications, therefore reach the goal of rapid degradation at special conditions for polyester polymers such as PET and resolve the environment pollution problems resulting from the application of such kind of polymers.

For the purpose of above objectives of invention, the technical approaches used in the present invention are as following:

In one aspect, the present invention provide a kind of rapidly degradable polyester polymers, with the repeat units consisting of non-degradable chain blocks A and degradable blocks B, obtained by condensation polymerization and these polyester polymers have formula of

$$-\left( AB \right)_n- ;$$

wherein said non-degradable blocks have a structure according to Formula (I):

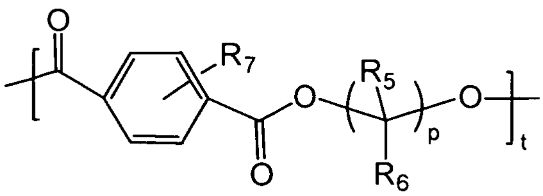

**(I);**

and wherein said degradable blocks have a structure according to Formula (II):

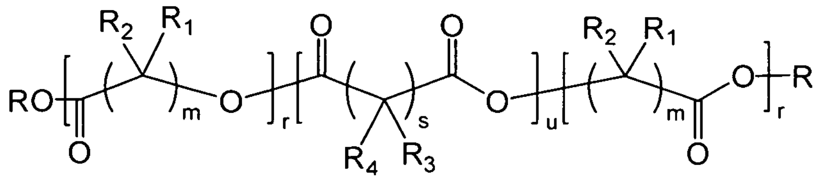

**(II);**

resulting in polyester polymers

$$-(AB)_n-$$

having a structure according to Formula (III) :

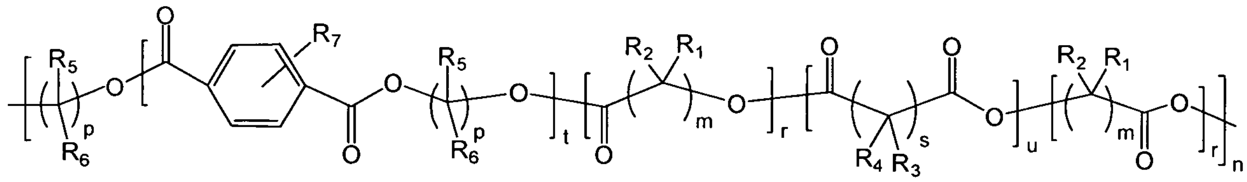

**(III);**

wherein:

R is methyl;
$R_1$, $R_2$, $R_3$, $R_4$, $R_5$, $R_6$, $R_7$ are H,
p=2;
m and s are any integer independently selected from 1,2,3,4, or 5;
t is an integer larger than 1, less than 31;
r=1 or 2;
u=1 or 2;
n is an integer larger than 2.

Also disclosed herein are polyester polymers obtained by condensation polymerization as defined above, resulting in polyester polymers **-(-AB-)-$_n$-** having a structure according to Formula (III) wherein p, m, s , r and u are integers larger than 0, less than 11 ; t is an integer larger than 1, less than 31; n is an integer larger than 1; R, $R_1$, $R_2$, $R_3$, $R_4$, $R_5$, $R_6$, $R_7$ are members independently selected in each structural units from H, substituted or unsubstituted alkyl, substituted or unsubstituted heteroalkyl, substituted or unsubstituted cycloalkyl, substituted or unsubstituted heterocycloalkyl, substituted or unsubstituted aryl and substituted or unsubstituted heteroaryl, substituted or unsubstituted alkoxy, ester, nitro, amine, amide, or thiol.

Also disclosed herein are polyester polymers obtained by condensation polymerization as defined above, resulting in polyester polymers **-(-AB-)-$_n$-** having a structure according to Formula (III) wherein p, m, s , r and u are integers larger than 0, less than 11; t is an integer larger than 1, less than 31; n is an integer larger than 1; R, $R_1$, $R_2$, $R_3$, $R_4$, $R_5$, $R_6$, are independently selected in each structural units from H or $C_1$-$C_{10}$ alkyls; $R_7$ is selected from H, substituted or unsubstituted alkyl, substituted or unsubstituted heteroalkyl, substituted or unsubstituted cycloalkyl, substituted or unsubstituted heterocycloalkyl, substituted or unsubstituted aryl.

Also disclosed herein are polyester polymers obtained by condensation polymerization as defined above, resulting in polyester polymers **-(-AB-)-$_n$-** having a structure according to Formula (III), wherein p, m, s , r and u are integers larger than 0, less than 11; t is an integer larger than 1, less than 31; n is an integer larger than 1; R, $R_1$, $R_2$, $R_3$, $R_4$, $R_5$, $R_6$, are independently selected in each structural units from H or methyl, ethyl, propyl, isopropyl, butyl, isobutyl, tert-butyl ; $R_7$ is selected from H, substituted or unsubstituted alkyl, substituted or unsubstituted heteroalkyl, substituted or unsubstituted cycloalkyl, substituted or unsubstituted heterocycloalkyl.

In another aspect, the present invention provides a preparation method for manufacturing rapidly degradable polyester polymers as following:

a) Organic synthesis of degradable blocks B:

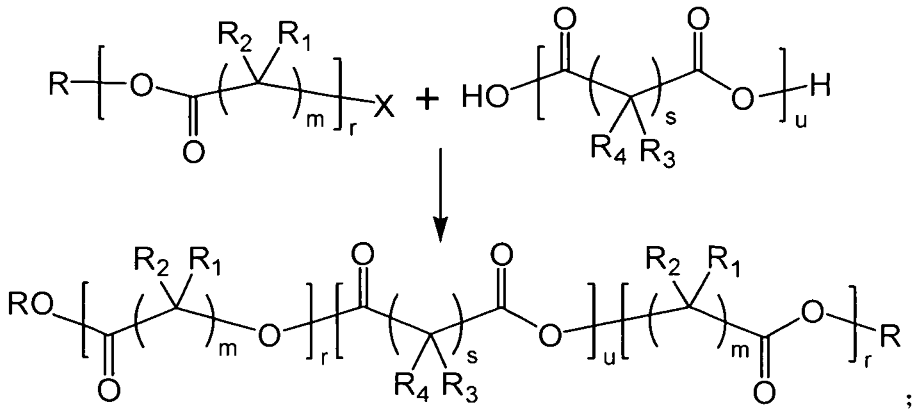

b) Condensation polymerizing non-degradable blocks A and degradable blocks B through solution polymerization or bulk polymerization:

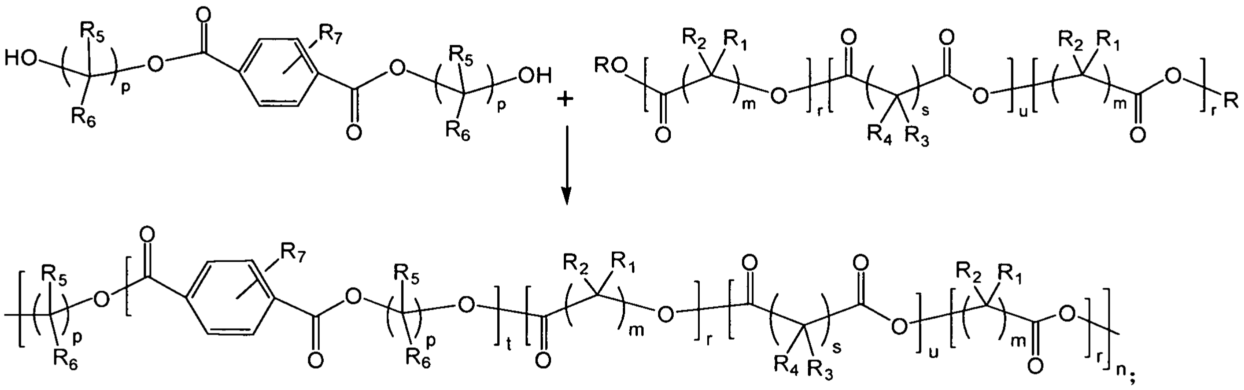

where the definition of R, $R_1$, $R_2$, $R_3$, $R_4$, $R_5$, $R_6$, $R_7$ and p, m, s, r, u, t, n are the same as aboveand X is selected from Cl, Br, I, $NH_2$ or OH.

In some embodiments, the synthesis of non-degradable blocks A consists of the following steps:

In some embodiments, another preparation method of making rapidly degradable polyester polymers is as following:

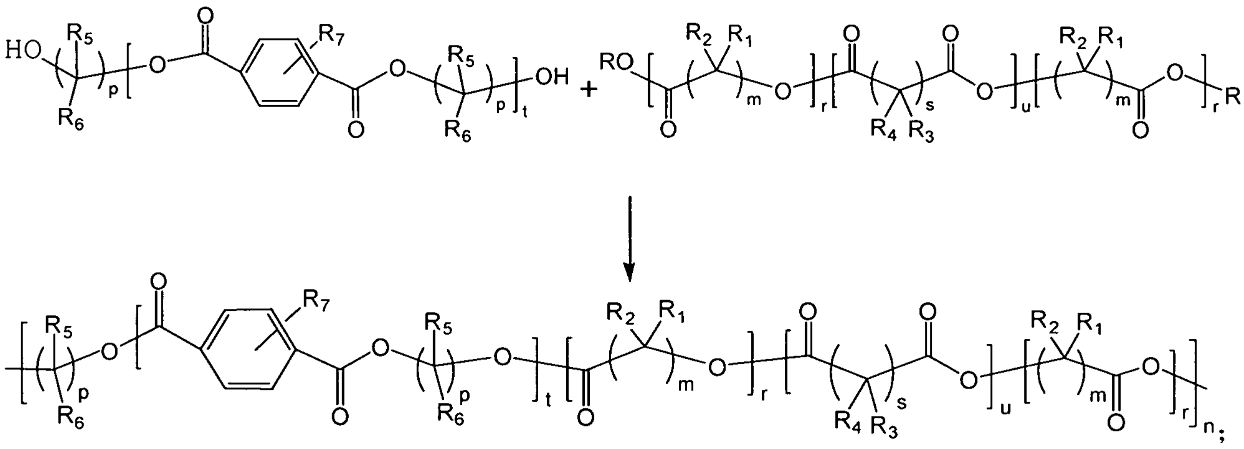

wherein the definition of R, $R_1$, $R_2$, $R_3$, $R_4$, $R_5$, $R_6$, $R_7$ and p, m, s, r, u, t, n are the same as above.

In further embodiments, synthesis of

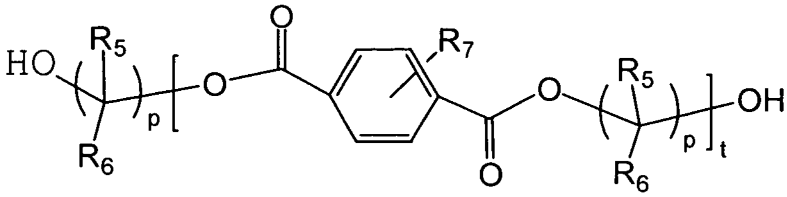

includes the following steps:

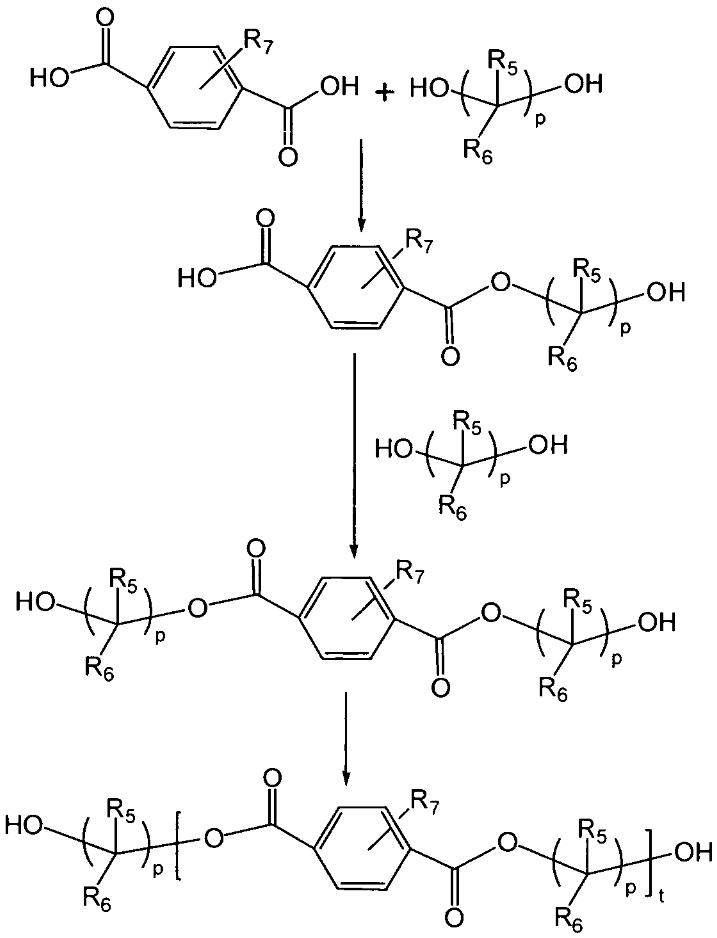

In order to ensure degradable blocks to be distributed evenly along the polymer main chains, the non-degradable blocks or oligmers will be synthesized first through melting condensation polymerization (e.g. reaction under vacuum at 240~290°C for 2~7 hours), then the degradable blocks are added to continue the melting condensation polymerization (e.g. continue the reaction under vacuum at 240 ~ 290°C for 2~7 hours).

High molecular weight polymers are obtainable as long as the moles of non-degradable blocks are larger than the moles of degradable blocks, because the ethylene glycol in the over-dosed non-degradable blocks can be removed under vacuum at high temperature and therefore conduct a self-condensation polymerization to form high molecular polymers.

Compared to the existing technologies, the polyester polymers disclosed in the present invention embrace differently structured degradable blocks along the polymer main chains and therefore reduced crystallinity, making its melting temperature much lower than that of regular polyester polymers. In addition, due to embraced degradable blocks, the soft segments of polymer become longer, and also the glass transition temperature of the polymer is lower than that of regular polyester polymers. Thus, the polyester polymers in the present invention not only have excellent processing properties, but also can be degraded quickly into many short non-degradable chains in proper environment (such as alkaline solutions), followed by further complete degradation of non-degradable short segments. It effectively resolves the problems of environmental pollution resulting from applications of such kind of polymers and satisfies the need of wide applications of such kind of polymers. Especially, it can ensure such kind of polymers applied to beverage bottle, food package film, shopping bags and other food package containers. In addition , the method of preparation in the present invention is simple, low cost, the raw materials are easily obtained at low prices. It is suitable for volume production and has practical value and application potentials.

**Figures Captions**

Figure 1 is the DSC curve for polyester mPET(MeGSGMe) prepared in example 1.
Figure 2 is the degradation curve for polyester mPET(MeGSGMe) prepared in example 1.

Figure 3 is the relationship of intrinsic viscosity vs polymerization time for PET oligmers prepared in example 2.

**Examples**

The following examples are a detailed and complete demonstration of the present invention. All following experimental methods in all examples are regular experimental methods, except when specially commented. All chemicals and materials are commercially obtained except when specially commented.

The methods of chemical analysis and analytical instruments in the present invention are described as following:

1. Determination of intrinsic viscosity (IV)

Industry standard method for determination of the PET: according to the society of the plastics industry (SPI's) on standard measurements of PET polymers in phenol /1,1,2,2-four chloroethane (60:40 by weight) mixed solution, with Ubbelohde viscometer, the temperature for determination is 25°C.

Because the degree of polymerization of PET is calculated by following formula:

$$DP_n = 1.19 \times IV - 7;$$

wherethe unit for IV is dL/g, therefore the chain length of polyesters according to the present invention will be calculated in same methods.

2. 2. Chemical composition and structure

The chemical structures according to the present invention are determined by NMR at temperature of 20°C in solution with D substituted chloroform solvent ($CDCl_3$).

3. Thermal properties measurements

The thermal properties of polyester polymers prepared according to the present invention are measured with Differential scanning calorimeter (DSC) Q20, manufactured by TA Instruments.

4. Degradation measurements

The degradation measurement is the weight loss percentage of polyester polymers prepared in present invention in 5% NaOH aqueous solution at 100°C with stirring for n hours.

5. Mechanical property test

Measurement of tensile strength is performed by Shanghai Institute of Organic Chemistry, Academia Sinica, according to ASTMD638-97 standard methods.

**Example 1**

1. Synthesis of degradable block: di-(methyl hydroxyacetate) succinate (MeGSGMe).

To a solution of succinic acid (23.62 gram, 0.20 mole) and trimethylamine (56 ml, 0.4 mole) in anhydrous acetonitrile (50 ml) methyl bromoacetate (73.43g, 0.48 mole)was added drop wise. The solution was stirred at room temperature for 5 hours and 100 ml more anhydrous acetonitrile was added when the white precipitate showed up. After 24 hours reaction the solution is filtrated to remove ammonium salts and the solvent acetonitrile was removed in vacuum. The residue was under vacuum (3 mmHg) at 50 °C for 16 hours to remove extra methyl bromoacetate. The residue then was dissolved in ethyl acetate (200 ml) and washed with DI water to remove trace amounts of ammonium.The solvent was removed in vacuum after dried with $MgSO_4$ and 41.43 gram solid degradable block, MeGSGMe, was collected, yield: 79%. $^1$HNMR ($CDCl_3$, 400 Mz) $\delta$ 4.66 (D, 4H); $\delta$ 3.77 (S, 6H); $\delta$ 2.80 (T, 4H).

2. Synthesis of the presently invented polyester polymers

Bis(2-hydroxyethyl) terephthalate (BHET, 71.19 gram,) and di-(methyl hydroxyacetate) succinate (degradable blocks MeGSGMe, 10.49 gram) (repeat unit molar ration for BHET:MeGSGMe is 7:1) and 0.01 wt % $Sb_2O_3$ are placed in the stainless steel pressure reactor with a magnetic stirring bar and are N2/vacuum purged three times and the vacuum is reduced to about 2 mmHg. The system is placed in a 275°C oil bath for 5 hours with stirring under vacuum. The bomb is then opened and added with dry ice to cool down the melt to room temperature quickly. 57.2 gram solid was collected, that is the rapidly degradable polyester polymer described in present invention, named as: mPET(MeGSGMe). The bulk solid is roughly ground into small pieces and the viscosity is measured in phenol/1,1,2,2-tetrachloroethane (60/40 weight ratio) according to SPI's (The Society of Plastic Industry) standard PET measurement procedure.

Figure 1 is the DSC measurement (temperature raised at 10°C/min) for the above synthesized polymer and shows its thermal properties. It can be observed that the glass transition temperature of the new polymer is 56°C, the melting temperature is 216°C the re-crystallization temperature during temperature raising is 121°C. Figure 1 shows that due to the differently structured degradable blocks, which are embraced in the polymer main chains, the crystallinity of the polyester polymers obtained in present invention was reduced, and its melting temperature was much lower than that of regular PET. In addition, due to the embracement of degradable blocks, the soft segments of the polyester chains are longer, that makes the glass transition temperature of the presently invented polyester lower than that of regular PET.

The intrinsic viscosity of obtained polymer is measured as 0.57 dL/g in phenol/1,1,2,2 four chloroethane (60:40 weight ratio), based on the standard measurement methods of Society of Plastic Industry (SPI) for PET.

In addition, the calculation based on B. Gantillon's formula shows that the degree of polymerization for polyesters synthesized in this example is equal to $DP_n = 1.19\times IV - 7 = 1.19\times(0.57\times100) - 7 = 61$, the degree of polymerization for regular PET.

According to ASTMD638-97 standard, the Young's module for the polymer synthesized in this example is measured as 910 Mpa, the tensile stress is 57 MPa.

Figure 2 shows the weight loss of synthesized polyester polymers at 100°C, 5% NaOH aqueous solution with stirring for n hours. From the figure it can be seen that the weight loss percentage of the polymer synthesized in this example reaches 49.78% after 120 minutes, 83.84% after 240 minutes, 92.24% after 480 minutes. This further demonstrated the rapid degradability of polyester polymers synthesized according to the present invention at given conditions.

**Example 2**

1. Synthesis of degradable block: MeGSGMe

To a solution of succinic acid (23.62g , 0.20 mol) and triethyl amine (84mL, 0.6mol) in methylene chloride (50mL) methyl chloroacetate (65.11g , 0.6mol) was added drop wise and stirred at room temperature for 5 hours. When white precipitate appeared, methylene chloride (100mL) was added. The solution was stirred for 24 hours, the solid was removed through filtration. The filtrate was washed with water to remove residual amines, dried with anhydrous $MgSO_4$. The solvent $CH_2Cl_2$ was removed in vacuum and 47.20g solid, degradable block,MeGSGMe, was obtained with a yield of 90%.

$^1$HNMR ($CDCl_3$, 400 Mz) $\delta$4.66 (D, 4H); $\delta$3.77 (S, 6H); $\delta$2.80 (T, 4H)o

2. Synthesis of non-degradable blocks: PET oligomer

Bis(2-hydroxyethyl) terephthalate (BHET, 100 gram, 0.393mol) and $Sb_2O_3$ (0.02 gram) was placed in a 250mL pressure reactor, purged with nitrogen gas three times and then was heated under vacuum in 45 minutes to 275°C; the system was maintained under 3 mmHG vacuum at 275°C for a various time period (2~7 hours)to obtain different PET oligomers with various intrinsic viscosity. The obtained PET oligomers were measured for intrinsic viscosities in phenol/1,1,2,2 four chloroethane (60:40 weight ratio) mixed solution. Figure 4 shows the co-relationship of intrinsic viscosity of PET oligomer vs polymerization time.

3. Synthesis of polyester polymers described in present invention

The degradable blocks synthesized in step 1 were added into the PET oligomers synthesized in step 2 and then continued to polymerize at 275°C for 1~3 hours and terminated at the given degree of polymerization (intrinsic viscosity). According to this method, polymers with different mole ratios of degradable blocks/non-degradable blocks = 1:5, 1:7, 1:9 and so on can be synthesized (i.e. t = 5, 7, 9...etc).

Table 1 is the results of the mechanical property test for polymers in this example according to a degradable blocks/non-degradable blocks mole ratio of 1:5, 1:7, 1:9.

Table 1 Characterization Results for Various Polymers

| degradable blocks/non-degradable blocks | IV (dL/g) | Tg (°C) | Tm (°C) | Young's Module (MPa) | Tensile Stress (MPa) |
|---|---|---|---|---|---|
| 1:5 | 0.61 | 54 | 199 | 890 | 57.5 |
| 1:7 | 0.57 | 56 | 216 | 910 | 57.0 |
| 1:9 | 0.713 | 63 | 213 | 930 | 57.5 |

In summary, the polyester polymers provided in the present invention not only have excellent mechanical processing properties but also can be rapidly degraded in proper environments (such as alkaline solution) and therefore effectively resolve the environmental pollution problems caused by this kind of polymers. It satisfies the wide application demand and especially ensures that such kind of polymers can be applied in beverage bottles, food package films, shopping bags and other food package containers. In addition, the method of preparation according to the present invention is simple, low cost, the raw materials are easily obtained at low cost. It is suitable for volume production and has practical value and application potentials.

Finally, the above examples are only used to further detail the technical demonstration of the invention, and cannot be understood as limitations on the scope of the protected invention, any non-essential improvements and adjustments based on the contents of the invention will fall into the scope of protection of the invention.

## Claims

**1.** Rapidly degradable polyester polymers

$$-\!\left( AB \right)_{n}\!- ,$$

which is made from polycondensation of repeat structure units comprising non-degradable blocks A and degradable blocks B, wherein:

the non-degradable blocks A have a structure of Formula **(I):**

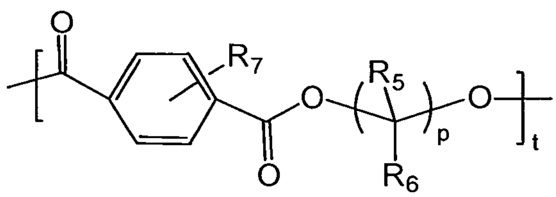

**(I);**

and wherein the degradable blocks B have a structure of Formula **(II):**

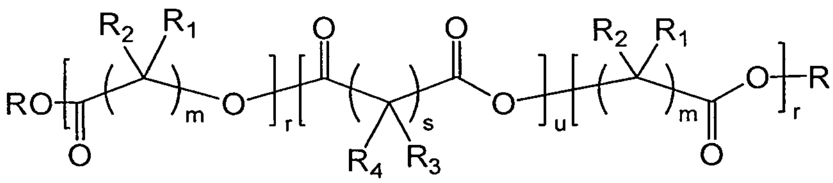

**(II);**

resulting in polyester polymers

$$-\left(AB\right)_n-$$

having a structure of Formula **(III):**

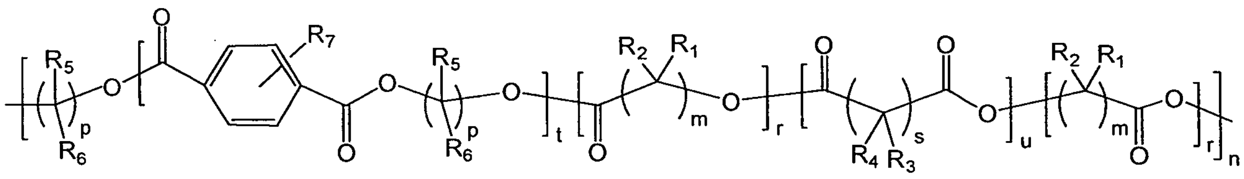

**(III);**

wherein

R is methyl;
$R_1$, $R_2$, $R_3$, $R_4$, $R_5$, $R_6$, $R_7$ are H;
p=2;
m and s are any integers independently selected from 1, 2, 3, 4, 5;
t is an integer larger than 1, less than 31;
r=1 or 2;
u=1 or 2;
n is an integer larger than 2.

**2.** A method of making a polymer according to claim 1, comprising degradable blocks and non-degradable blocks, said method comprising the steps of:

a) Synthesis of degradable block B

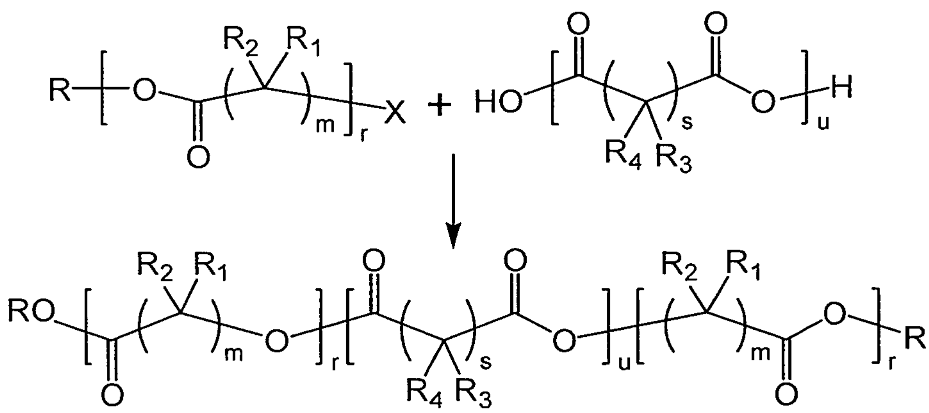

;

b) Polycondensation polymerization of non-degradable blocks with degradable blocks through solution polymerization or melting polymerization

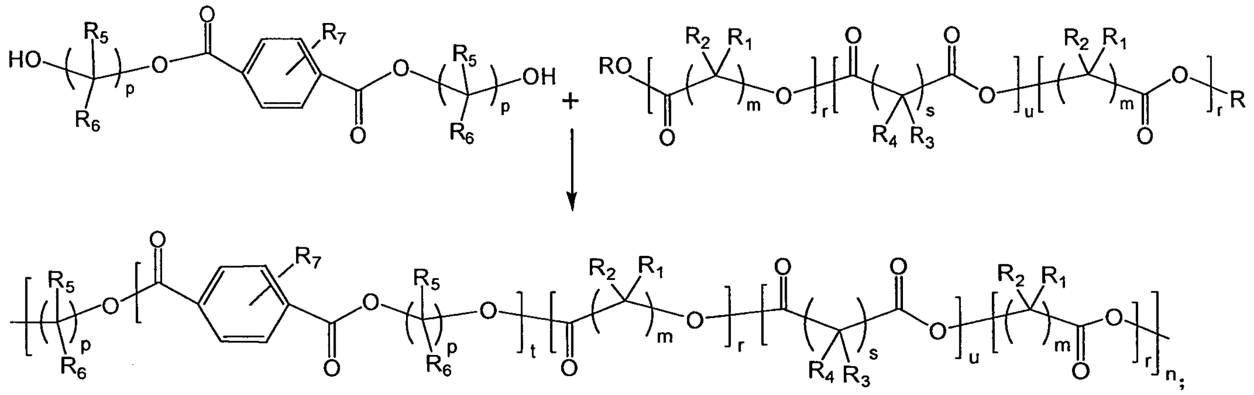

wherein the definition of R, $R_1$, $R_2$, $R_3$, $R_4$, $R_5$, $R_6$, $R_7$ and p, m, s, r, u, t, n are the same as defined in claim 1 and X is selected from Cl, Br, I, $NH_2$ or OH.

**3.** A method of making a polymer according to claim 2, wherein synthesis of said non-degradable block A comprises the step of:

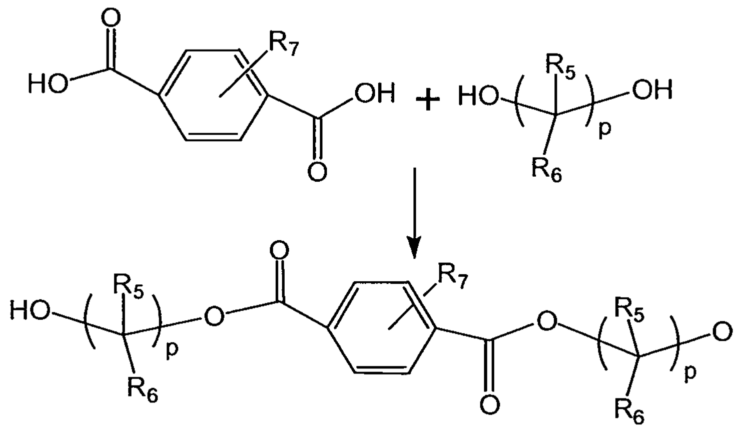

**4.** A method of making said rapidly degradable polyester polymers according to claim 1, comprising the step of:

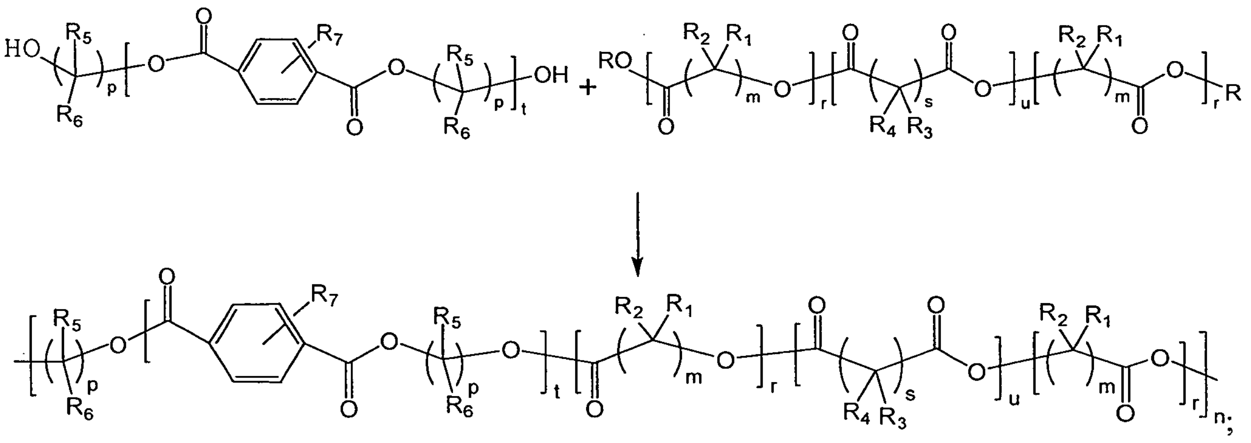

wherein the definition of R, $R_1$, $R_2$, $R_3$, $R_4$, $R_5$, $R_6$, $R_7$ and p, m, s, r, u, t, n are the same as those defined in claim 1.

**5.** A method according to claim 4, wherein said synthesis of

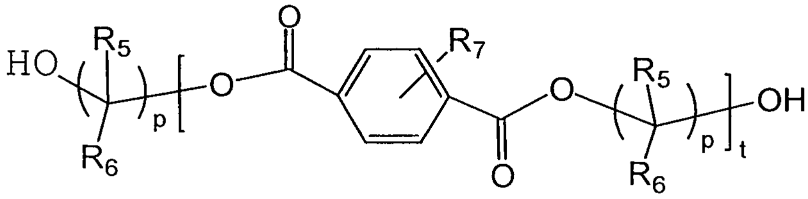

comprises the steps:

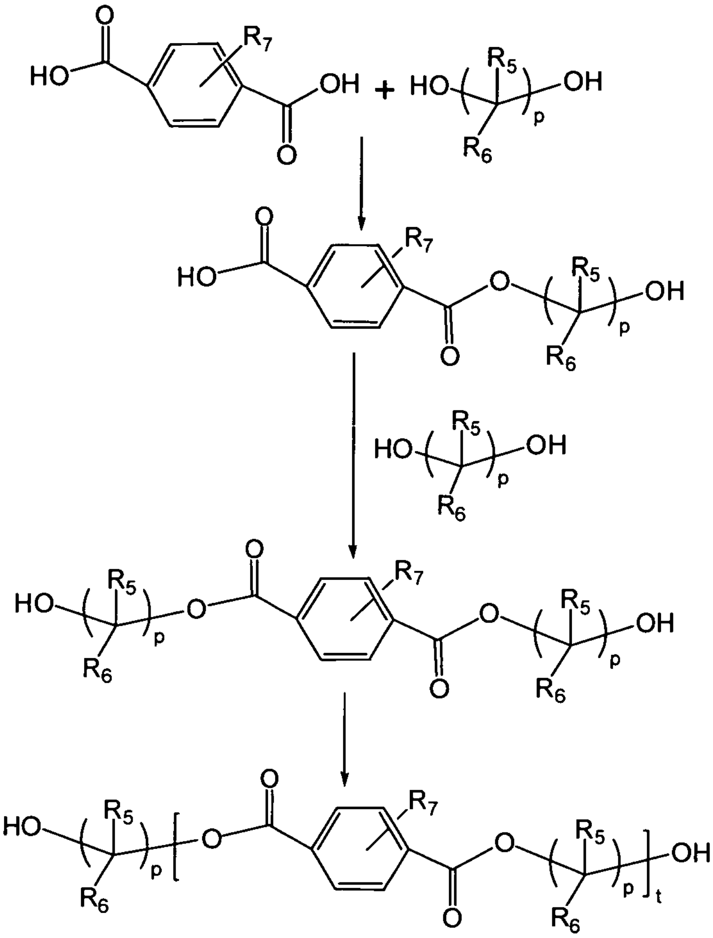

6. A method of making polymers according to claims 2 or 4, wherein non-degradable blocks or oligomers are first synthesized, and then degradable blocks are added to continue the melting polymerization.

7. A method according to claim 6, wherein the conditions for melting polymerization are: polymerization at 240~290°C under vacuum for 2~7 hours.

8. A method according to claims 2 or 4, wherein the hydroxyl moles contained in non-degradable blocks are larger than the hydroxyl moles contained in degradable blocks.

9. Polyester polymers according to claim 1, for use in beverage package bottles, food package films, shopping bags, and other food containers.

## Patentansprüche

1. Schnell abbaubare Polyester-Polymere

$$-(AB)_n- ,$$

die durch eine Polykondensation von sich wiederholenden Struktureinheiten, die nicht-abbaubare Blöcke A und abbaubare Blöcke B umfassen, hergestellt sind, wobei:

die nicht-abbaubaren Blöcke A eine Struktur der Formel (I) haben:

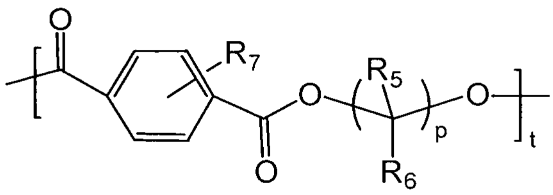

**(I)**;

und wobei die abbaubaren Blöcke B eine Struktur der Formel (II) haben:

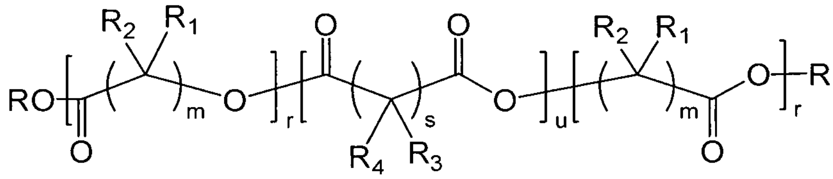

**(II)**;

resultierend in Polyester-Polymeren

$$-(AB)_n-$$

mit einer Struktur der Formel (III):

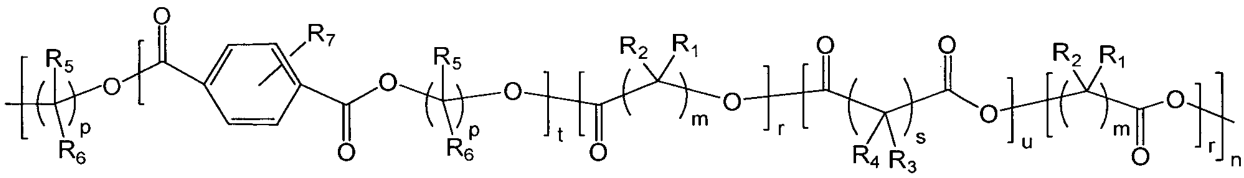

**(III)**;

wobei

R Methyl ist;
$R_1$, $R_2$, $R_3$, $R_4$, $R_5$, $R_6$, $R_7$ Wasserstoff sind;
p=2 ist;
m und s irgendwelche ganzen Zahlen sind, die unabhängig voneinander aus 1, 2, 3, 4, 5 ausgewählt sind;
t eine ganze Zahl, die größer als 1 ist und kleiner als 31 ist;
r=1 oder 2 ist;
u=1 oder 2 ist;
n eine ganze Zahl größer als 2 ist.

**2.** Ein Verfahren zur Herstellung eines Polymers nach Anspruch 1, umfassend abbaubare Blöcke und nicht-abbaubare

Blöcke, wobei das Verfahren die Schritte von umfasst:

a) Synthese vom abbaubaren Block B

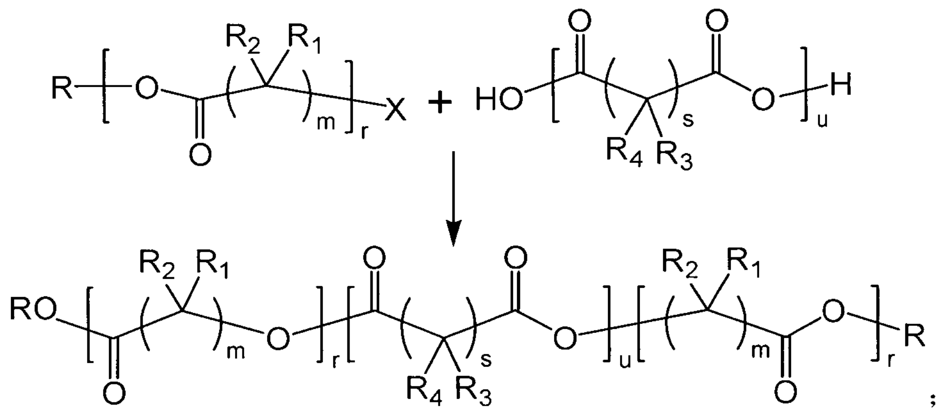

b) Polykondensationspolymerisation von nicht-abbaubaren Blöcken mit abbaubaren Blöcken durch Lösungspolymerisation oder Schmelzpolymerisation

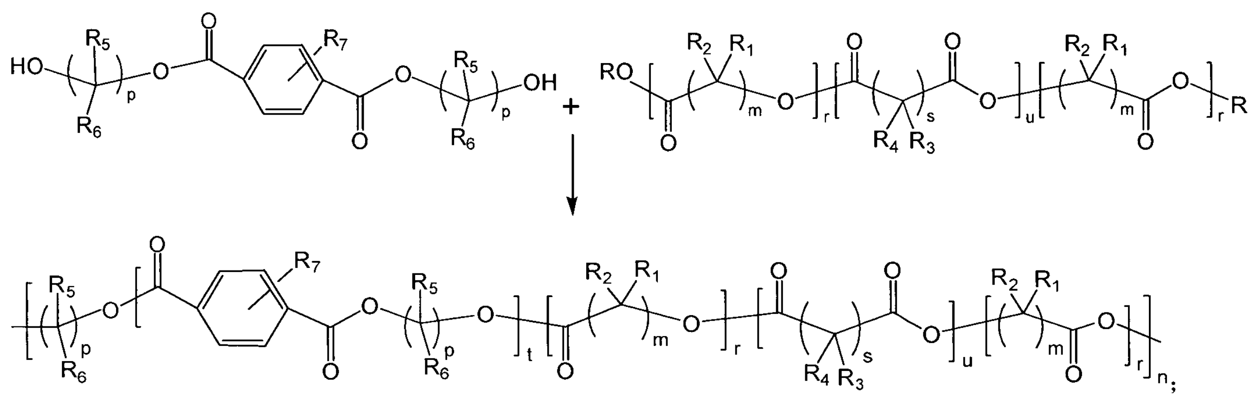

wobei die Definition von R, $R_1$, $R_2$, $R_3$, $R_4$, $R_5$, $R_6$, $R_7$ und p, m, s, r, u, t, n dieselben sind wie in Anspruch 1 definiert und X ausgewählt ist aus Cl, Br, I, $NH_2$ oder OH.

**3.** Ein Verfahren zur Herstellung eines Polymers nach Anspruch 2, wobei die Synthese dieses nicht-abbaubaren Blocks A den Schritt von umfasst:

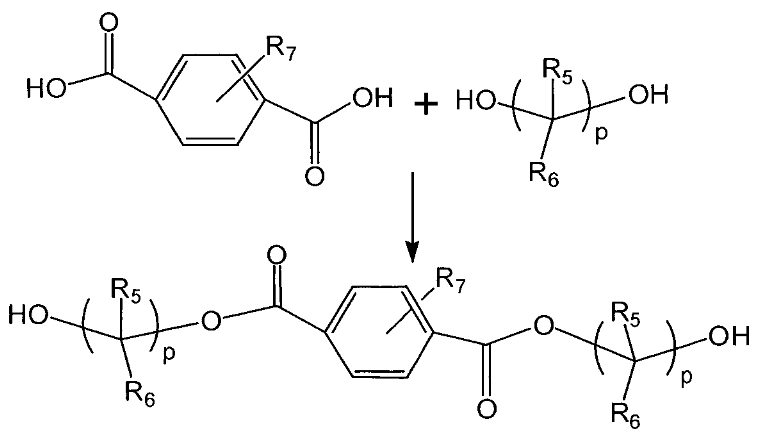

**4.** Ein Verfahren zur Herstellung von schnell abbaubaren Polyester-Polymeren nach Anspruch 1, umfassend den

Schritt von:

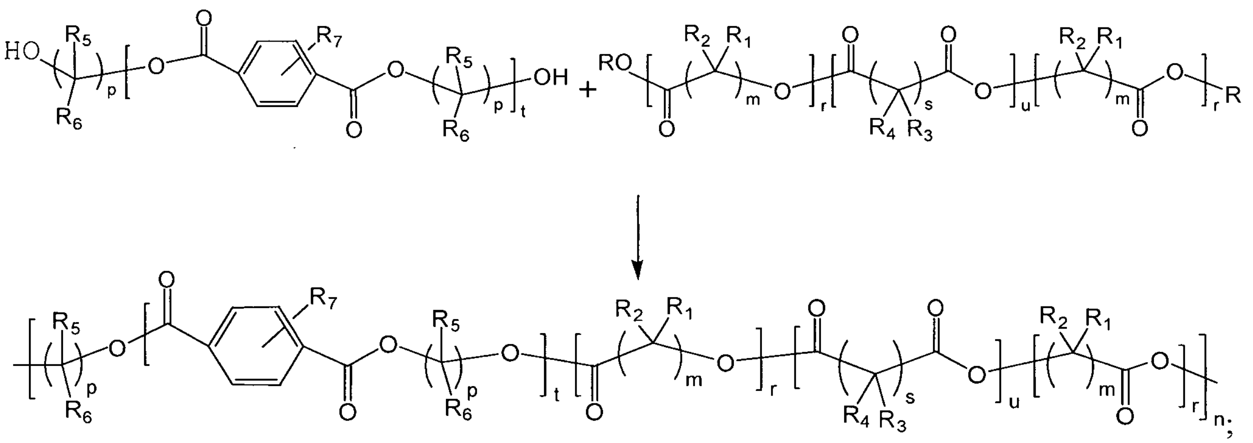

wobei die Definition von R, $R_1$, $R_2$, $R_3$, $R_4$, $R_5$, $R_6$, $R_7$ und p, m, s, r, u, t, n dieselben sind wie jene definiert in Anspruch 1.

**5.** Ein Verfahren gemäß Anspruch 4, wobei diese Synthese von

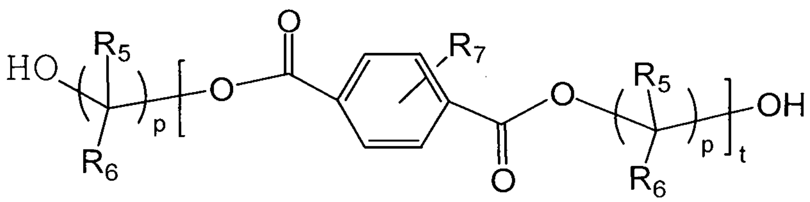

die Schritte umfasst:

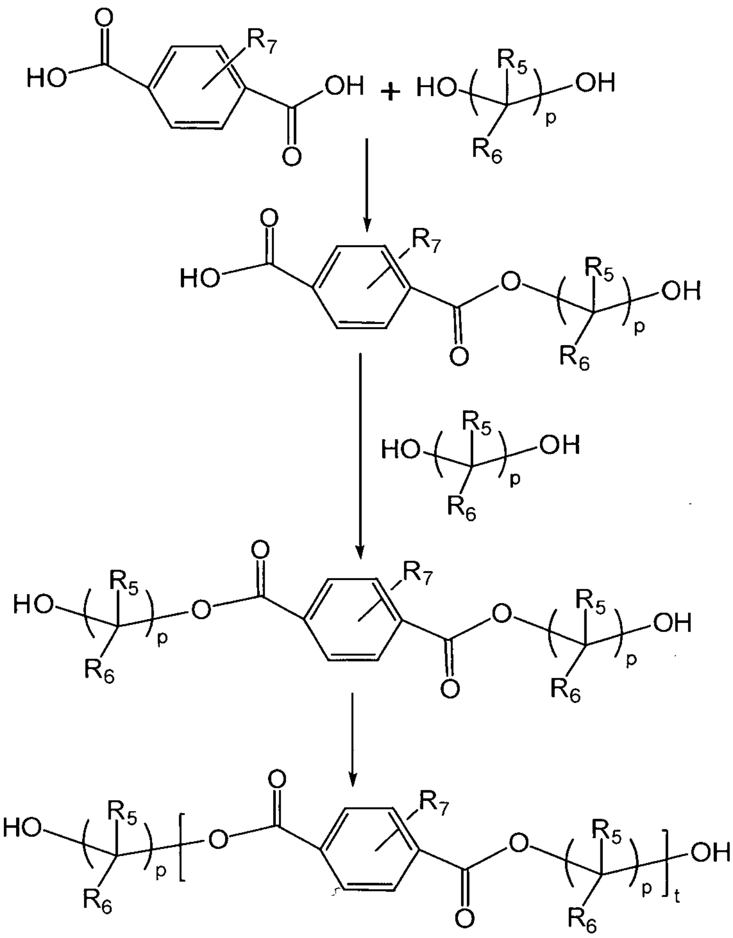

6. Ein Verfahren zur Herstellung von Polymeren nach Ansprüchen 2 oder 4, wobei die nicht-abbaubaren Blöcke oder Oligomere zuerst synthetisiert und dann die abbaubaren Blöcke zur Fortsetzung der Schmelz-Polymerisation hinzugefügt werden.

7. Ein Verfahren nach Anspruch 6, wobei die Bedingungen für die Schmelz-Polymerisation sind: Polymerisation bei 240~290°C unter Vakuum für 2~7 Stunden.

8. Ein Verfahren nach den Ansprüchen 2 oder 4, wobei die Hydroxyl-Mole, enthalten in den nicht abbaubaren Blöcken, größer sind als die Hydroxyl-Mole enthalten in den abbaubaren Blöcken.

9. Polyester-Polymere nach Anspruch 1 zur Verwendung in der Getränkeflaschenverpackung, in Nahrungsmittelverpackungsfilmen, Einkaufstaschen und anderen Nahrungsmittelbehältnissen.

## Revendications

1. Polymères de polyester rapidement dégradables

$$-\left( AB \right)_n-$$

qui sont produits par polycondensation d'unités de structure répétées comprenant des séquences non dégradables A et des séquences dégradables B, où:

les séquences non dégradables A ont une structure de formule **(I):**

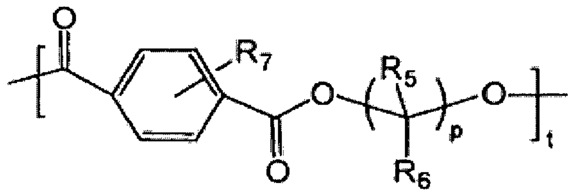

**(I);**

et où les séquences dégradables B ont une structure de formule **(II):**

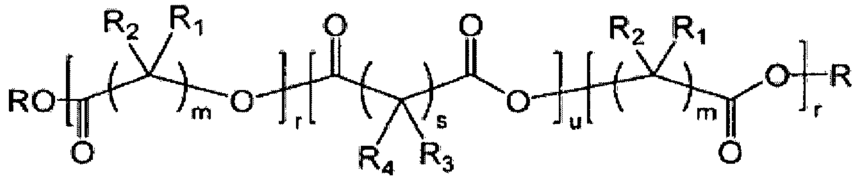

**(II);**

ce qui conduit à des polymères de polyester

$$-(AB)_n-$$

ayant une structure de formule **(III):**

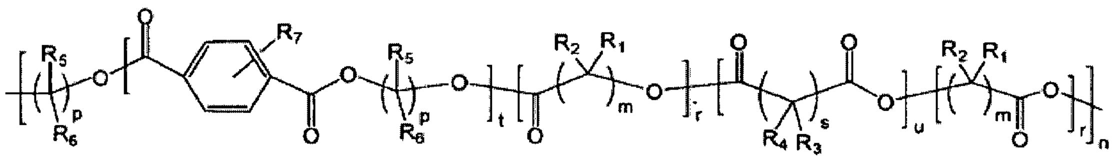

**(III);**

où

R est méthyle;
$R_1$, $R_2$, $R_3$, $R_4$, $R_5$, $R_6$, $R_7$ sont H;
p = 2;
m et s sont des entiers quelconques choisis indépendamment parmi 1, 2, 3, 4, 5;
t est un entier plus grand que 1, plus petit que 31;
r = 1 ou 2;
u = 1 ou 2;
n est un entier plus grand que 2.

**2.** Procédé de production d'un polymère selon la revendication 1, comprenant des séquences dégradables et des séquences non dégradables, ledit procédé comprenant les étapes de:

a) synthèse d'une séquence dégradable B

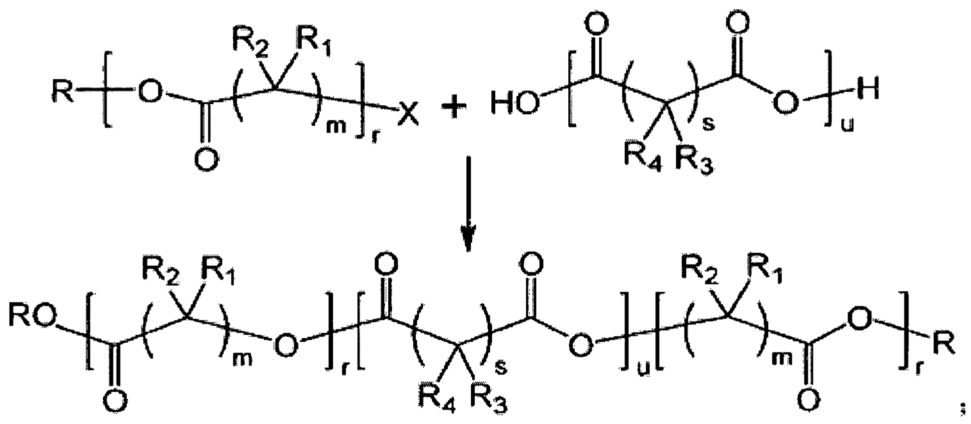

b) polymérisation par polycondensation de séquences non dégradables avec des séquences dégradables par polymérisation en solution ou polymérisation à l'état fondu,

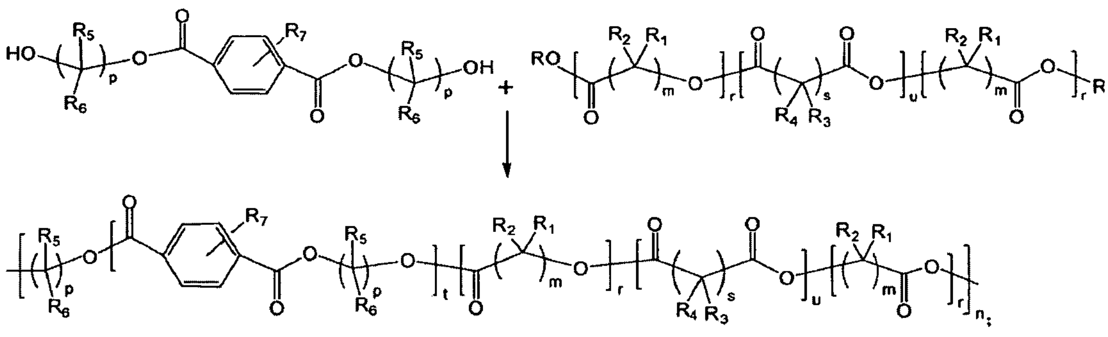

où les définitions de R, $R_1$, $R_2$, $R_3$, $R_4$, $R_5$, $R_6$, $R_7$ et p, m, s, r, u, t, n sont les mêmes que défini dans la revendication 1 et X est choisi parmi Cl, Br, I, $NH_2$ ou OH.

**3.** Procédé de production d'un polymère selon la revendication 2, où la synthèse de ladite séquence non dégradable A comprend l'étape de:

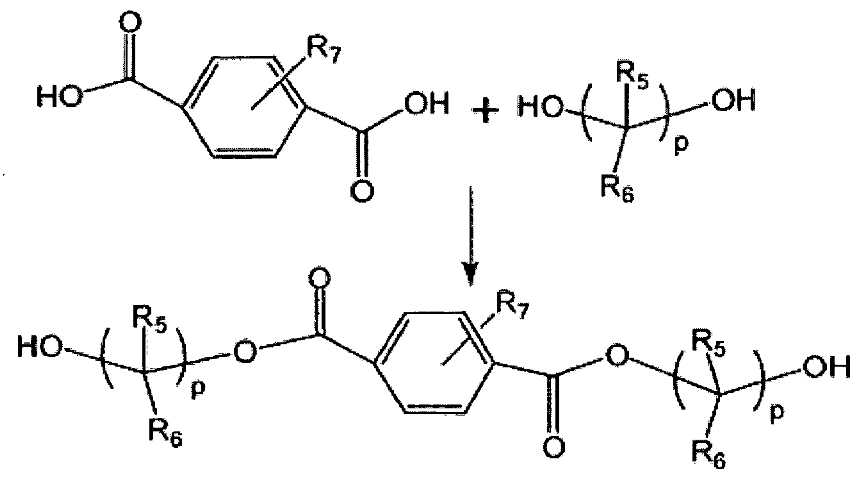

**4.** Procédé de production desdits polymères de polyester rapidement dégradables selon la revendication 1, comprenant l'étape de:

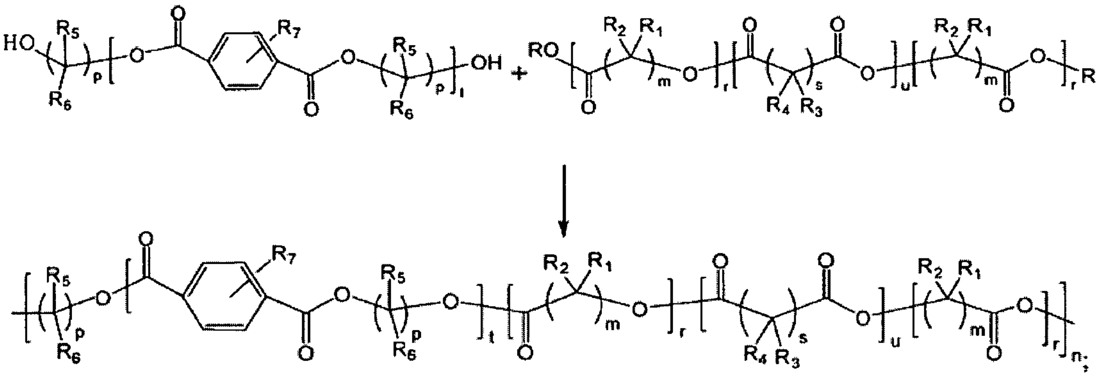

où les définitions de R, $R_1$, $R_2$, $R_3$, $R_4$, $R_5$, $R_6$, $R_7$ et p, m, s, r, u, t, n sont les mêmes que défini dans la revendication 1.

**5.** Procédé selon la revendication 4, où ladite synthèse de

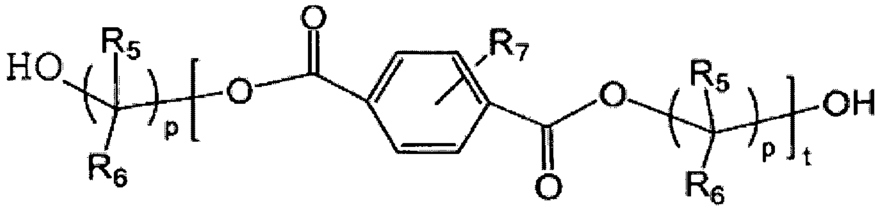

comprend les étapes:

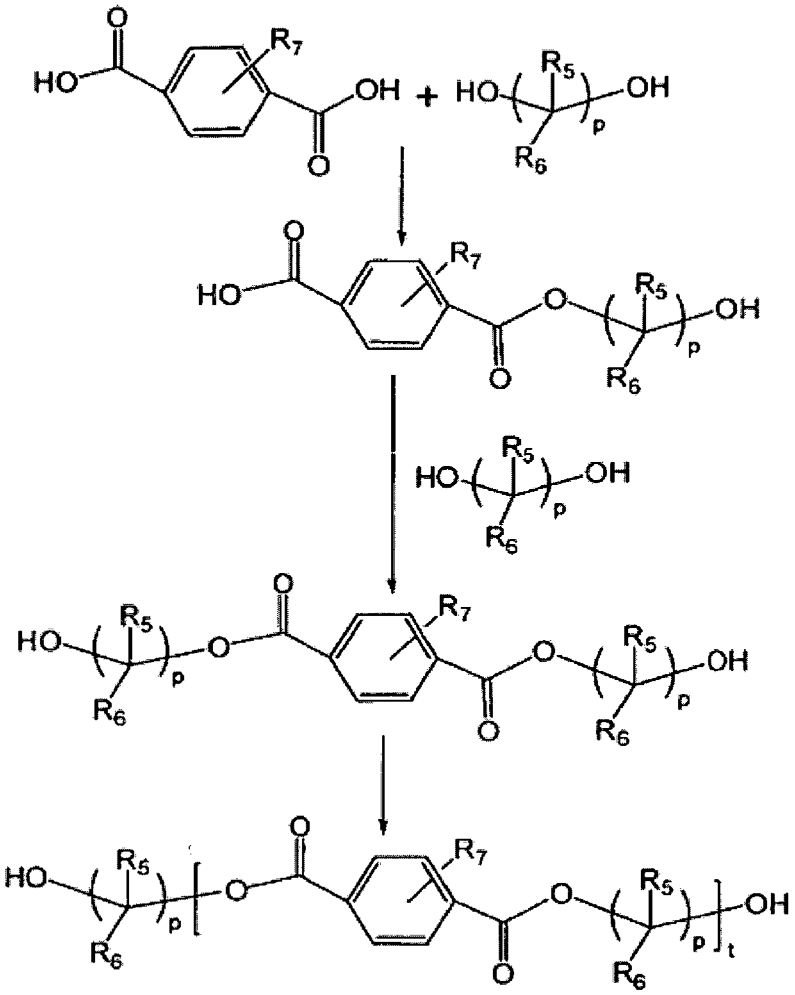

6. Procédé de production de polymères selon les revendications 2 ou 4, où des séquences ou oligomères non dégradables sont d'abord synthétisés, puis des séquences dégradables sont ajoutées pour continuer la polymérisation à l'état fondu.

7. Procédé selon la revendication 6, où les conditions pour la polymérisation à l'état fondu sont: polymérisation à 240 ~ 290°C sous vide pendant 2~7 heures.

8. Procédé selon les revendications 2 ou 4, où les moles d'hydroxyle contenues dans les séquences non dégradables sont plus nombreuses que les moles d'hydroxyle contenues dans les séquences dégradables.

9. Polymères de polyester selon la revendication 1, destinés à être utilisés dans des bouteilles de conditionnement de boissons, des films de conditionnement d'aliments, des sacs pour les courses, et d'autres récipients pour aliments.

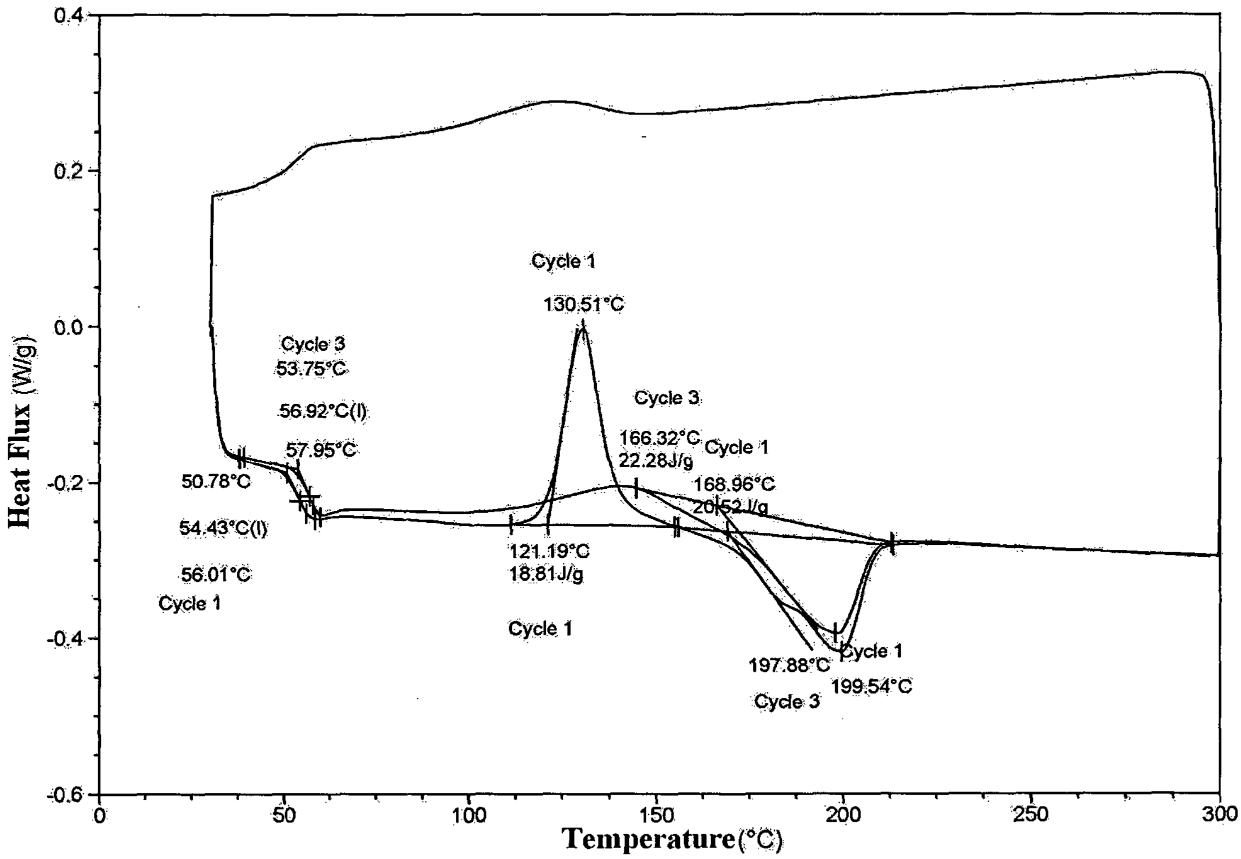

0.4
0.2
0.0
-0.2
-0.4
-0.6
Heat Flux (W/g)
0
50
100
150
200
250
300
Temperature(°C)
Cycle 1
130.51°C
Cycle 3
53.75°C
56.92°C(I)
57.95°C
50.78°C
54.43°C(I)
56.01°C
Cycle 1
Cycle 3
166.32°C
22.28J/g
Cycle 1
168.96°C
20.52J/g
121.19°C
18.81J/g
Cycle 1
197.88°C
Cycle 1
199.54°C
Cycle 3


Figure 1

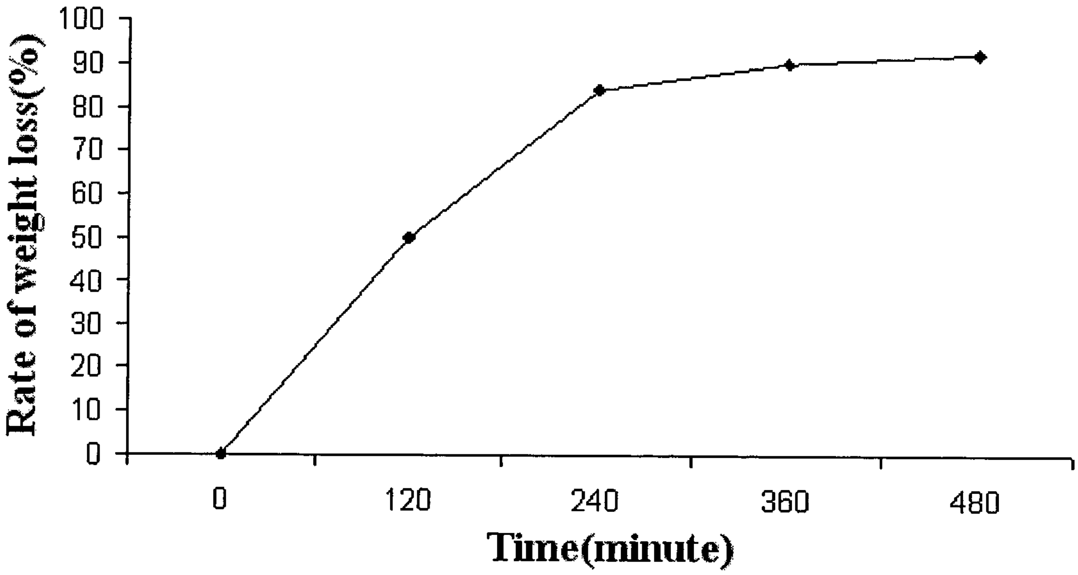


Figure 2

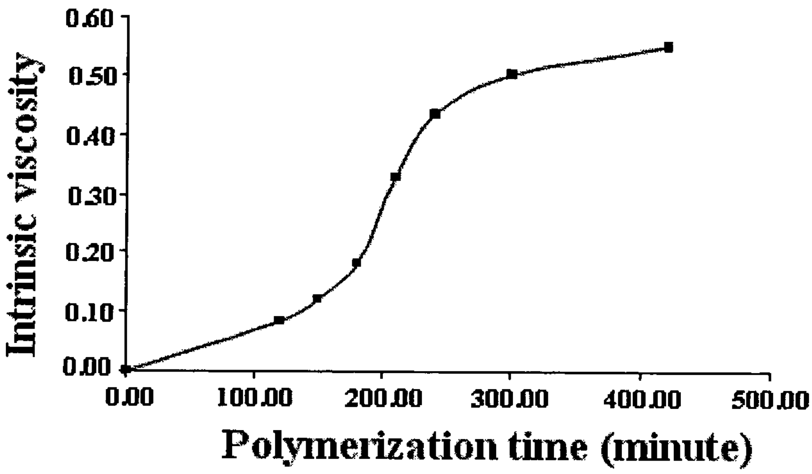


Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61095541 B
- US 13061802 B
- US 0956222 W
- WO 2010030599 A2